# EUROPEAN PATENT APPLICATION

(11) **EP 4 793 137 A1**
(43) Date of publication of application: **19.08.2026**
(21) Application number: 25158482.7
(22) Date of filing: 18.02.2025
(51) Int. Cl.: B62D 13/06, B62D 15/02, B62D 13/00

(54) **ESTIMATING A PATH CURVATURE OF A TRAILER**

(71) Applicant: Volvo Truck Corporation, 405 08 Göteborg (SE)
(72) Inventor: JONASSON, Mats, 433 49 PARTILLE (SE); PANAHANDEH, Ghazaleh, 414 67 GÖTEBORG (SE)
(74) Representative: Kransell & Wennborg KB

(57) **Abstract**

A method, comprising: receiving (S51), for each point in time of a series of consecutive points in time, a set of indications including an indication of an articulation angle (θ), an indication of a yaw rate (ω_{z,tractor}) of the tractor (3), and an indication of a longitudinal speed (vₓ) of the tractor (3); estimating (S52), for each point in time of the series of consecutive points in time, an instantaneous turning radius (Rᵢᵣ) of the trailer (5) based on the indication of the articulation angle (θ), the indication of the yaw rate (ω_{z,tractor}) of the tractor (3), and the indication of the longitudinal speed (vₓ) of the tractor (3); curve-fitting (S53) a time series of estimated instantaneous turning radii (Rᵢᵣ) of the trailer (5) to an arc (33) of a circle having a radius (R); and determining (S54) an indication of an instantaneous path curvature of the trailer (5) based on the radius (R) of the circle.

## Description

### TECHNICAL FIELD

The disclosure relates generally to vehicle motion management. In particular aspects, the disclosure relates to estimating a path curvature of a trailer of a combination vehicle. The disclosure can be applied to heavy-duty vehicles, such as trucks, buses, and construction equipment, in particular configured for pulling a trailer using an articulated joint, among other vehicle types. Although the disclosure may be described with respect to a particular vehicle, the disclosure is not restricted to any particular vehicle.

### BACKGROUND

For control of a combination vehicle comprising a tractor and a trailer coupled to the tractor by an articulated joint, it is advantageous to take into account an instantaneous path curvature of the trailer. It may therefore be desirable to provide for improved estimation of the instantaneous path curvature of a trailer, or of an equivalent indication of the instantaneous path curvature.

### SUMMARY

According to a first aspect of the disclosure, there is provided a computer system comprising processing circuitry configured to: receive, for each point in time of a series of consecutive points in time, a set of indications including an indication of an articulation angle of an articulated joint coupling a tractor and a trailer together to thereby form a combination vehicle, an indication of a yaw rate of the tractor, and an indication of a longitudinal speed of the tractor; estimate, for each point in time of the series of consecutive points in time, an instantaneous turning radius of the trailer based on the indication of the articulation angle, the indication of the yaw rate of the tractor, and the indication of the longitudinal speed of the tractor for that point in time; curve-fit a resulting time series of estimated instantaneous turning radii of the trailer to an arc of a circle having a radius; and determine an indication of an instantaneous path curvature of the trailer based on the radius of the circle.

The first aspect of the disclosure may seek to enable improved determination of an indication of an instantaneous path curvature of the trailer of a combination vehicle. For example, the determination may be relatively accurate and/or relatively fast, compared to existing schemes. A technical benefit may include that accurate and up-to-date estimations of the instantaneous path curvature can be provided to allow for improved operation of the combination vehicle. For example, lateral control can be provided without excessive off-tracking, and for a manually operated combination vehicle, driver assistance can be provided based on the estimations of the instantaneous path curvature. For instance, the rear view mirrors and/or cameras of the tractor can be automatically adjusted in view of the estimated instantaneous path curvature of the trailer. The determined indication of the instantaneous path curvature of the trailer may, for example, be the path curvature, defined as being the inverse of the radius of the circle obtained through curve-fitting, or the determined indication may be the radius of the circle obtained through curve-fitting.

The present disclosure is based on the insight that, while a tractor-trailer combination is moving, the path of the trailer can be seen as a sequence of circular arcs, each being defined by a radius. Starting from this insight, the present inventors have realized that an improved estimation of the path can be achieved by curve-fitting a time series of estimated instantaneous turning radii of the trailer to an arc of a circle. In particular, it has been realized that this can result in an improved accuracy and/or estimation speed, as compared to using other methods, such as a moving average or a low-pass filter. This may, in turn, provide for improved motion management of the combination vehicle.

Optionally in some examples, including in at least one preferred example, the processing circuitry may be configured to curve-fit the time series of estimated instantaneous turning radii of the trailer using a least square curve-fitting method. A technical benefit may include that least square curve-fitting methods are generally relatively fast, and may be robust to outliers, making them suitable for curve-fitting based on noisy data.

Optionally in some examples, including in at least one preferred example, the indication of the articulation angle of the articulated joint may comprise a steering angle of the tractor; and the processing circuitry may be further configured to estimate the articulation angle of the articulated joint based on the steering angle of the tractor using a kinematic vehicle model, resulting in a modeled estimate of the articulation angle. A technical benefit may include that the indication of the instantaneous path curvature of the trailer can be determined without the need for any sensors on the trailer.

Optionally in some examples, including in at least one preferred example, the indication of the articulation angle of the articulated joint may comprise a trailer positioning indication obtained from a trailer sensing system comprised in the tractor; and the processing circuitry may be further configured to estimate the articulation angle of the articulated joint additionally based on the trailer positioning indication. A technical benefit may include that the accuracy of the estimation of the articulation angle can be improved, which provides for improved accuracy in the determination of the indication of the instantaneous path curvature of the trailer. In particular, a combination of a noisy measurement, such as from an imaging sensor or a radar, and an estimation resulting from an uncertain model, may improve the accuracy, without requiring any sensor in or on the trailer. The trailer sensing system may, for example, comprise a rear-view camera and/or a rear-view radar, etc. Such a trailer sensing system may already be present in the tractor for providing user guidance when reversing, and it may be relatively easy to use an output from the trailer sensing system for providing an additional estimate of the articulation angle.

Optionally in some examples, including in at least one preferred example, the processing circuitry may be configured to estimate the articulation angle of the articulated joint additionally based on the trailer positioning indication using a Kalman filter. A technical benefit may include that a Kalman filter may provide an optimum estimation of the articulation angle when a noisy measurement (from the trailer sensing system) is weighted with an uncertain model (the above-mentioned vehicle model), as long as the noise is Gaussian, which is generally the case.

Optionally in some examples, including in at least one preferred example, the processing circuitry may be configured to: estimate, for each point in time of the series of consecutive points in time, a yaw rate of the trailer based on the indication of the yaw rate of the tractor and the indication of the articulation angle; and estimate, for each point in time of the series of consecutive points in time, the instantaneous turning radius of the trailer based on the longitudinal speed of the tractor and the yaw rate of the trailer. A technical benefit may include that the accuracy of the determination of the indication of the instantaneous path curvature of the trailer can be improved by additionally estimating the yaw rate of the trailer, and additionally basing the estimations of the instantaneous turning radii on the estimated yaw rate of the trailer.

Optionally in some examples, including in at least one preferred example, the processing circuitry may be configured to: estimate, for each point in time of the series of consecutive points in time, a side slip rate of the trailer using a kinematic vehicle model; and estimate, for each point in time of the series of consecutive points in time, the instantaneous turning radius of the trailer based on the longitudinal speed of the tractor and the yaw rate of the trailer. A technical benefit may include that the accuracy of the determination of the indication of the instantaneous path curvature of the trailer can be improved by additionally estimating the side slip rate of the trailer, and additionally basing the estimations of the instantaneous turning radii on the estimated side slip rate of the trailer.

Optionally in some examples, including in at least one preferred example, the processing circuitry may be configured to control the tractor using control parameters adapted for the estimated instantaneous path curvature.

The computer system according to examples of the present disclosure may advantageously be included in a vehicle, further comprising a coupling arrangement for articulated coupling of a trailer to the vehicle.

Optionally in some examples, including in at least one preferred example, the vehicle may comprise an trailer sensing system arranged and configured to provide a trailer positioning indication of a trailer coupled to the vehicle. The trailer positioning indication indicates the position of the trailer in relation to the vehicle (tractor).

According to a second aspect of the disclosure, there is provided a computer-implemented method, comprising: receiving, for each point in time of a series of consecutive points in time, a set of indications including an indication of an articulation angle of an articulated joint coupling a tractor and a trailer together to thereby form a combination vehicle, an indication of a yaw rate of the tractor, and an indication of a longitudinal speed of the tractor; estimating, for each point in time of the series of consecutive points in time, an instantaneous turning radius of the trailer based on the indication of the articulation angle, the indication of the yaw rate of the tractor, and the indication of the longitudinal speed of the tractor for that point in time; curve-fitting a time series of estimated instantaneous turning radii of the trailer to an arc of a circle having a radius; and determining an indication of an instantaneous path curvature of the trailer based on the radius of the circle. The second aspect of the disclosure may seek to enable improved determination of an indication of an instantaneous path curvature of the trailer of a combination vehicle. For example, the determination may be relatively accurate and/or relatively fast, compared to existing schemes. A technical benefit may include that accurate and up-to-date estimations of the instantaneous path curvature can be provided to allow for improved operation of the combination vehicle. For example, lateral control can be provided without excessive off-tracking, and driver assistance can be provided based on the estimations of the instantaneous path curvature. For instance, the rear view mirrors and/or cameras of the tractor can be automatically adjusted in view of the estimated instantaneous path curvature of the trailer. The determined indication of the instantaneous path curvature of the trailer may, for example, be the path curvature, defined as being the inverse of the radius of the circle obtained through curve-fitting, or the determined indication may be the radius of the circle obtained through curve-fitting.

The present disclosure is based on the insight that, while a tractor-trailer combination is moving, the path of the trailer can be seen as a sequence of circular arcs, each being defined by radius. Starting from this insight, the present inventors have realized that an improved estimation of the path can be achieved by curve-fitting a time series of estimated instantaneous turning radii of the trailer to an arc of a circle. In particular, it has been realized that this can result in an improved accuracy and/or estimation speed, as compared to using other methods, such as a moving average or a low-pass filter. This may, in turn, provide for improved motion management of the combination vehicle.

Optionally in some examples, including in at least one preferred example, the method may comprise curve-fitting the time series of estimated instantaneous turning radii of the trailer using a least square curve-fitting method. A technical benefit may include that least square curve-fitting methods are generally relatively fast, and may be robust to outliers, making them suitable for curve-fitting based on noisy data.

Optionally in some examples, including in at least one preferred example, the indication of the articulation angle of the articulated joint may comprise a steering angle of the tractor; and the method may further comprise estimating the articulation angle of the articulated joint based on the steering angle of the tractor using a kinematic vehicle model, resulting in a modeled estimate of the articulation angle. A technical benefit may include that the indication of the instantaneous path curvature of the trailer can be determined without the need for any sensors on the trailer.

Optionally in some examples, including in at least one preferred example, the indication of the articulation angle of the articulated joint may comprise a trailer positioning indication obtained from a trailer sensing system comprised in the tractor; and the method may comprise estimating the articulation angle of the articulated joint additionally based on the trailer positioning indication. A technical benefit may include that the accuracy of the estimation of the articulation angle can be improved, which provides for improved accuracy in the determination of the indication of the instantaneous path curvature of the trailer. In particular, a combination of a noisy measurement, such as from an imaging sensor or a radar, and an estimation resulting from an uncertain model, may improve the accuracy, without requiring any sensor in or on the trailer. The trailer sensing system may, for example, comprise a rear-view camera and/or a rear-view radar, etc. Such a trailer sensing system may already be present in the tractor for providing user guidance when reversing, and it may be relatively easy to use an output from the trailer sensing system for providing an additional estimate of the articulation angle.

Optionally in some examples, including in at least one preferred example, the method may comprise estimating the articulation angle of the articulated joint additionally based on the trailer positioning indication using a Kalman filter. A technical benefit may include that a Kalman filter may provide an optimum estimation of the articulation angle when a noisy measurement (from the trailer sensing system) is weighted with an uncertain model (the above-mentioned vehicle model), as long as the noise is Gaussian, which is generally the case.

Optionally in some examples, including in at least one preferred example, the method may comprise: estimating, for each point in time of the series of consecutive points in time, a yaw rate of the trailer based on the indication of the yaw rate of the tractor and the indication of the articulation angle; and estimating, for each point in time of the series of consecutive points in time, the instantaneous turning radius of the trailer based on the longitudinal speed of the tractor and the yaw rate of the trailer for that point in time. A technical benefit may include that the accuracy of the determination of the indication of the instantaneous path curvature of the trailer can be improved by additionally estimating the yaw rate of the trailer, and additionally basing the estimations of the instantaneous turning radii on the estimated yaw rate of the trailer.

Optionally in some examples, including in at least one preferred example, the method may comprise: estimating, for each point in time of the series of consecutive points in time, a side slip rate of the trailer using a kinematic vehicle model; and estimating, for each point in time of the series of consecutive points in time, the instantaneous turning radius of the trailer based on the longitudinal speed of the tractor and the yaw rate of the trailer. A technical benefit may include that the accuracy of the determination of the indication of the instantaneous path curvature of the trailer can be improved by additionally estimating the side slip rate of the trailer, and additionally basing the estimations of the instantaneous turning radii on the estimated side slip rate of the trailer.

Optionally in some examples, including in at least one preferred example, the method may comprise controlling the tractor using control parameters adapted for the estimated instantaneous path curvature.

According to a third aspect of the disclosure, there is provided a computer program product comprising program code for performing, when executed by the processing circuitry, the method of the second aspect of the disclosure.

According to a fourth aspect of the disclosure, there is provided a non-transitory computer-readable storage medium comprising instructions, which when executed by the processing circuitry, cause the processing circuitry to perform the method of the second aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle according to an example.
**FIG. 2** is an exemplary computer system according to an example.
**FIG. 3** is an illustration of an exemplary combination vehicle following a path.
**FIG. 4** is an illustration of an exemplary vehicle model.
**FIG. 5** is an exemplary method according to an example.
**FIG. 6** is an exemplary illustration of curve-fitting.
**FIG. 7** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

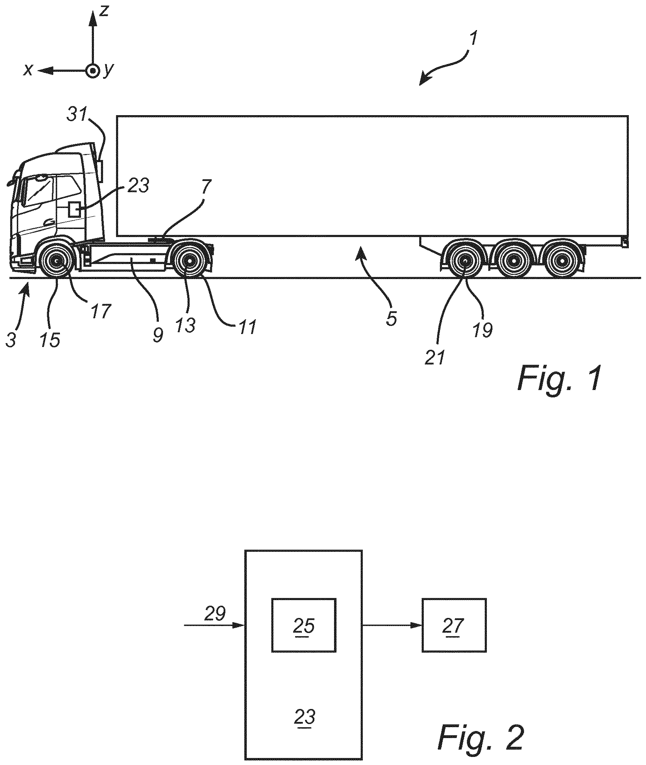

Fig. 1 is an exemplary combination vehicle 1 according to an example. Referring to Fig. 1, the combination vehicle 1 comprises a tractor 3, and a trailer 5 coupled to the tractor 3. In the example in Fig. 1, the trailer 5 is a semitrailer that is coupled to the tractor 3 by means of a fifth-wheel coupling 7. The tractor 3 may be an EV tractor, and may then have a battery pack 9. As is indicated in Fig. 1, the tractor 3 has driving wheels 11 on a rear drive axle 13, and front wheels 15 on a front axle 17. The trailer 5 has wheels 19 on at least one trailer axle 21. Further, the tractor 3 comprises a computer system 23, and a sensing system 31 arranged and configured to provide trailer positioning indication of a position of the trailer 5 in relation to the tractor 3. The trailer sensing system 31 may comprise a rear-view camera and/or a rear-view radar, etc. Fig. 1 shows one example of a combination vehicle 1 having a fifth-wheel coupling 7 for articulated coupling between a tractor 3 and a semitrailer 5. It should be noted that the present disclosure relates to other combination vehicles with other configurations, such as other articulated joints and/or other trailers.

Fig. 2 is an exemplary computer system 23 according to an example. The computer system 23 comprises processing circuitry 25, and may be coupled to a vehicle motion management controller 27 of the tractor 3, and may receive a set of indications 29. It should be noted that the computer system 23 need not necessarily be included in the tractor 3, but that it may be at least partly included in another part of the combination vehicle 1, or partly or wholly included in a cloud solution, so that processing by the processing circuitry 25 may be performed remotely from the tractor 3. If included in the tractor 3, the computer system 23 may be provided in the form of a centralized vehicle control unit, or as (a part of) a distributed vehicle control system, which may, for example, include a vehicle motion management control unit and/or a braking system control unit.

The processing circuitry 25 of the computer system 23 may be configured to receive, for each point in time of a series of consecutive points in time, a set of indications 29 including an indication of an articulation angle of the articulated joint 7 coupling the tractor 3 and the trailer 5 together to thereby form the combination vehicle 1, an indication of a yaw rate ω_{z,tractor} of the tractor 3, and an indication of a longitudinal speed vₓ of the tractor 3; estimate, for each point in time of the series of consecutive points in time, an instantaneous turning radius Rᵢᵣ of the trailer 5 based on the indication of the articulation angle θ, the indication of the yaw rate ω_{z,tractor} of the tractor 3, and the indication of the longitudinal speed vₓ of the tractor 3; curve-fit a time series of estimated instantaneous turning radii Rᵢᵣ of the trailer 5 to an arc 33 of a circle having a radius R; and determine an indication of an instantaneous path curvature of the trailer 5 based on the radius R of the circle. The processing circuitry 25 may be configured to provide the indication of the instantaneous path curvature of the trailer 5.

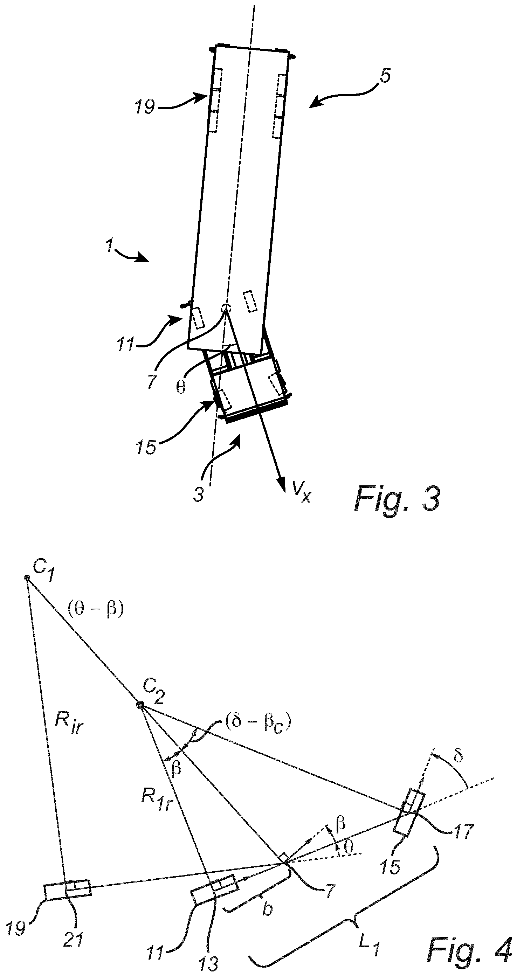

Fig. 3 is an illustration of an exemplary combination vehicle 1 where the tractor, traveling with a longitudinal tractor speed vₓ, is being steered. As is schematically indicated in Fig. 3, this results in an articulation angle θ of the articulated joint 7, which will cause the trailer 5 to follow a path with a certain path curvature. A simplified view of the situation in Fig. 3 is provided in Fig. 4, which is an illustration of an exemplary vehicle model, in particular a so-called kinematic one-track model of the combination vehicle 1 in Fig. 3.

Referring to Fig. 4, the combination vehicle 1 in Fig. 3 may be modeled as a one-track model, which means the left and right wheels are lumped together and axles lumped into axle groups. The model in Fig. 4 is a so-called kinematic mode which means that no lateral tire slip is taken into consideration, and velocity vectors are directed along the wheel hubs.

In Fig. 4, center of curvature for the path instantaneously followed by the trailer 5 is denoted C₁, and the center of curvature for the path instantaneously followed by the tractor 3 is denoted C₂. The steering angle of the tractor 3 is denoted δ, the articulation angle of the articulated joint 7 is denoted θ, the side slip of the trailer 5 (at the articulated joint 7) is denoted β, the distance from C₂ to the rear axle 13 of the tractor 3 is denoted Rᵢᵣ, the longitudinal distance between the rear axle 13 of the tractor 3 and the articulated joint 7 is denoted b, and the longitudinal distance between the rear axle 13 and the front axle 17 of the tractor 3 is denoted L₁.

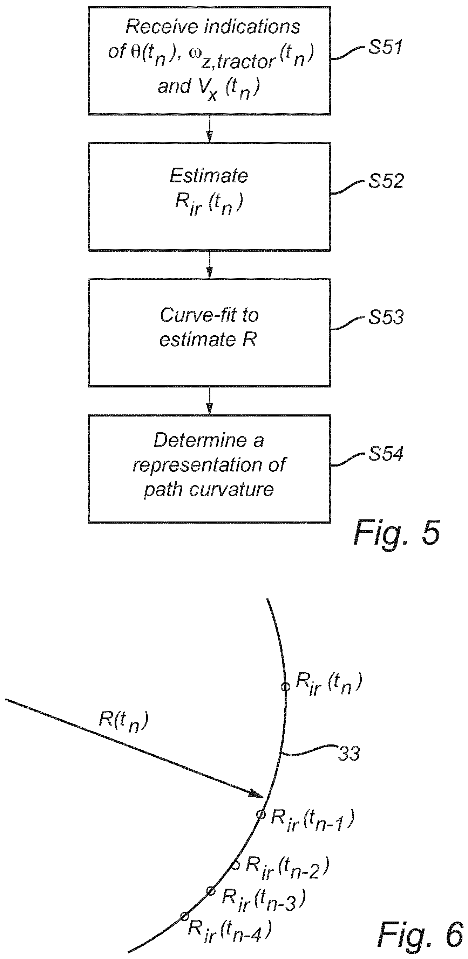

Fig. 5 is an exemplary method according to an example. Referring to the flow-chart in Fig. 5, with additional reference to the other figures as indicated, the method may first comprise receiving S51, for each point in time tₙ of a series of consecutive points in time, a set of indications including an indication of an articulation angle θ(tₙ) of an articulated joint 7 coupling a tractor 3 and a trailer 5 together to thereby form a combination vehicle 1, an indication of a yaw rate ω_{z,tractor}(tₙ) of the tractor 3, and an indication of a longitudinal speed vₓ(tₙ) of the tractor 3.

The indication of the yaw rate ω_{z,tractor}(tₙ) of the tractor 3, as well as the indication of the longitudinal speed vₓ(tₙ) of the tractor 3 may conveniently be obtained from one or more sensors that may be comprised in the tractor 3.

The indication of the articulation angle θ(tₙ) can be directly obtained from an articulation angle sensor. Advantageously, however, the articulation angle θ(tₙ) may be estimated using other indications. Thus, optionally, the indication of the articulation angle θ(tₙ) may comprise an indication of the steering angle δ(tₙ) of the tractor 3, and/or a trailer positioning indication TP(tₙ) obtained from a trailer sensing system 31 that may be comprised in the tractor 3. The articulation angle θ(tₙ) may then be estimated without the need for any sensor in or on the trailer 5, which would provide for a more convenient estimation of the articulation angle θ(tₙ).

Referring briefly to Fig. 4, as is, *per se,* well known to one of ordinary skill in the art, the vehicle model in Fig. 4 can be used to estimate the articulation angle θ, using the following relation:
$\dot{θ} = f \left(θ, {v}_{x}, δ\right) ,$
where vₓ is the longitudinal speed of the tractor 3. In examples where the indication of the articulation angle θ(tₙ) of the articulated joint 7 comprises a trailer positioning indication TP(tₙ) obtained from a trailer sensing system 31 comprised in the tractor 3, a Kalman filter may be used to improve the estimation of the articulation angle obtained from the vehicle model using the trailer positioning indication TP(tₙ). Hereby, the accuracy of the estimation of the articulation angle θ(tₙ) can be improved. In particular, a combination of a noisy measurement from the trailer sensing system 31, which may comprise an imaging sensor or a radar, and an estimation resulting from an uncertain model, such as the vehicle model in Fig. 4, may improve the accuracy, without requiring any sensor in or on the trailer 5. The trailer sensing system 31 may, for example, comprise a rear-view camera and/or a rear-view radar, etc. According to one example, a measurement of the distance between the tractor 3 and the trailer 5 may provide an indication of the articulation angle θ(tₙ), as long as the geometry is known.

After having received the set of indications, the method proceeds to estimate S52, for each point in time tₙ of the series of consecutive points in time, an instantaneous turning radius Rᵢᵣ(tₙ) of the trailer 5 based on the indication of the articulation angle θ(tₙ), the indication of the yaw rate ω_{z,tractor}(tₙ) of the tractor 3, and the indication of the longitudinal speed vₓ(tₙ) of the tractor 3.

Without taking into account the side slip β(tₙ) of the trailer 5, the instantaneous turning radius Rᵢᵣ(tₙ) of the trailer 5 can be estimated as:
${R}_{ir} \left({t}_{n}\right) = \frac{{v}_{x} \left({t}_{n}\right)}{{ω}_{z , trailer} \left({t}_{n}\right)} ,$
where ω_{z,trailer}(tₙ) is the yaw rate of the trailer 5, which can be estimated using the estimation of the rate of change of the articulation angle and the following relation:
${ω}_{z , trailer} \left({t}_{n}\right) = {ω}_{z , tractor} \left({t}_{n}\right) - \dot{θ} \left({t}_{n}\right) .$

For an improved estimation of the instantaneous turning radius Rᵢᵣ(tₙ) of the trailer 5, the side slip β(tₙ) of the trailer 5 may be considered. In that case, the instantaneous turning radius Rᵢᵣ(tₙ) of the trailer 5 can be estimated as:
${R}_{ir} \left({t}_{n}\right) = \frac{{v}_{x} \left({t}_{n}\right)}{{ω}_{z , trailer} \left({t}_{n}\right) + \dot{β} \left({t}_{n}\right)} ,$
where *β̇*(*tₙ*) denotes the rate of change of the side slip angle β(tₙ).

The side slip angle β(tₙ) can be estimated from the vehicle model in Fig. 4, using the following geometrical relation:
$β \left({t}_{n}\right) = arctan \left(\frac{b ⋅ tanδ \left({t}_{n}\right)}{{L}_{1}}\right) ,$
where b is the longitudinal distance between the rear axle 13 of the tractor 3 and the articulated joint 7, L₁ is the longitudinal distance between the rear axle 13 and the front axle 17 of the tractor 3, and δ(tₙ) is the steering angle of the tractor 3. The rate of change of the side slip angle can be estimated using the Euler approximation:
$\dot{β} \left({t}_{n}\right) \approx \left(\frac{β \left({t}_{n}\right) - β \left({t}_{n - 1}\right)}{dT}\right) ,$
where dT is the sampling time.

Returning to the flow-chart in Fig. 5, the method may proceed to curve-fit S53 a time series of estimated instantaneous turning radii Rᵢᵣ(tₙ) of the trailer 5 to an arc 33 of a circle having a radius R. Referring to the example illustration in Fig. 6, for example, the five latest estimations of the instantaneous turning radius of the trailer 5 may be used to estimate a best fit circle arc 33. In the example of Fig. 6, the, *per se,* well-known Pratt method for fitting circular data has been used.

Finally, the method determines S54 an indication of an instantaneous path curvature ρ(tₙ) of the trailer 5 based on the radius R(tₙ) of the circle arc 33. The path curvature is simply defined as the inverse of the radius of curvature, i.e. 1/ R(tₙ).

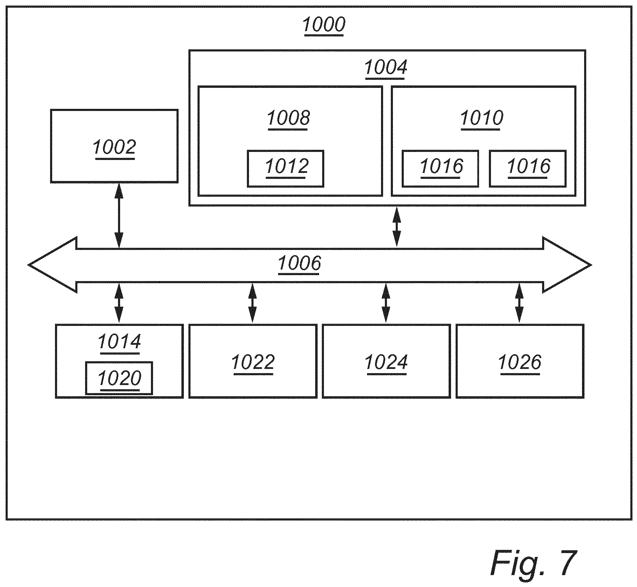

Fig. 7 is a schematic diagram of a computer system 1000 for implementing examples disclosed herein, such as for implementing examples of the computer system 23 according to examples. The computer system 1000 is adapted to execute instructions from a computer-readable medium to perform these and/or any of the functions or processing described herein. The computer system 1000 may be connected (e.g., networked) to other machines in a LAN, an intranet, an extranet, or the Internet, or by direct wired or wireless communication. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include processing circuitry 1002 (e.g., processing circuitry including one or more processor devices or control units), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or indication processing or for executing computer code stored in memory 1004. The processing circuitry 1002 may, for example, include a general-purpose processor, an application specific processor, a Digital indication Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a controller or control system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system comprising processing circuitry configured to:
receive, for each point in time of a series of consecutive points in time, a set of indications including an indication of an articulation angle of an articulated joint coupling a tractor and a trailer together to thereby form a combination vehicle, an indication of a yaw rate of the tractor, and an indication of a longitudinal speed of the tractor; estimate, for each point in time of the series of consecutive points in time, an instantaneous turning radius of the trailer based on the indication of the articulation angle, the indication of the yaw rate of the tractor, and the indication of the longitudinal speed of the tractor; curve-fit a time series of estimated instantaneous turning radii of the trailer to an arc of a circle having a radius; and determine an indication of an instantaneous path curvature of the trailer based on the radius of the circle.

Example 2: The computer system of example 1, wherein the processing circuitry is further configured to: curve-fit the time series of estimated instantaneous turning radii of the trailer using a least square curve-fitting method.

Example 3: The computer system of example 1 or 2, wherein: the indication of the articulation angle of the articulated joint comprises a steering angle of the tractor; and the processing circuitry is further configured to estimate the articulation angle of the articulated joint based on the steering angle of the tractor using a kinematic vehicle model, resulting in a modeled estimate of the articulation angle.

Example 4: The computer system of example 3, wherein: the indication of the articulation angle of the articulated joint comprises a trailer positioning indication obtained from a trailer sensing system comprised in the tractor; and the processing circuitry is further configured to estimate the articulation angle of the articulated joint additionally based on the trailer positioning indication.

Example 5: The computer system of example 4, wherein the processing circuitry is further configured to estimate the articulation angle of the articulated joint additionally based on the trailer positioning indication using a Kalman filter.

Example 6: The computer system of any of examples 1-5, wherein the processing circuitry is further configured to: estimate, for each point in time of the series of consecutive points in time, a yaw rate of the trailer based on the indication of the yaw rate of the tractor and the indication of the articulation angle; and estimate, for each point in time of the series of consecutive points in time, the instantaneous turning radius of the trailer based on the longitudinal speed of the tractor and the yaw rate of the trailer.

Example 7: The computer system of any of examples 1-6, wherein the processing circuitry is further configured to: estimate, for each point in time of the series of consecutive points in time, a side slip rate of the trailer using a kinematic vehicle model; and estimate, for each point in time of the series of consecutive points in time, the instantaneous turning radius of the trailer based on the longitudinal speed of the trailer and the yaw rate of the trailer.

Example 8: The computer system of any of examples 1-7, wherein the processing circuitry is further configured to control the tractor using control parameters adapted for the instantaneous path curvature.

Example 9: A vehicle comprising: a coupling arrangement for articulated coupling of a trailer to the vehicle; and the computer system of any of examples 1-8.

Example 10: The vehicle of example 9, further comprising an trailer sensing system arranged and configured to provide trailer positioning indication of a trailer coupled to the vehicle.

Example 11: A computer-implemented method, comprising: receiving, for each point in time of a series of consecutive points in time, a set of indications including an indication of an articulation angle of an articulated joint coupling a tractor and a trailer together to thereby form a combination vehicle, an indication of a yaw rate of the tractor, and an indication of a longitudinal speed of the tractor; estimating, for each point in time of the series of consecutive points in time, an instantaneous turning radius of the trailer based on the indication of the articulation angle, the indication of the yaw rate of the tractor, and the indication of the longitudinal speed of the tractor; curve-fitting a time series of estimated instantaneous turning radii of the trailer to an arc of a circle having a radius; and determining an indication of an instantaneous path curvature of the trailer based on the radius of the circle.

Example 12: The method of example 11, further comprising: curve-fitting the time series of estimated instantaneous turning radii of the trailer using a least square curve-fitting method.

Example 13: The method of example 11 or 12, wherein: the indication of the articulation angle of the articulated joint comprises a steering angle of the tractor; and the method further comprises estimating the articulation angle of the articulated joint based on the steering angle of the tractor using a kinematic vehicle model, resulting in a modeled estimate of the articulation angle.

Example 14: The method of example 13, wherein: the indication of the articulation angle of the articulated joint comprises a trailer positioning indication obtained from a trailer sensing system comprised in the tractor; and the method comprises estimating the articulation angle of the articulated joint additionally based on the trailer positioning indication.

Example 15: The method of example 14, further comprising estimating the articulation angle of the articulated joint additionally based on the trailer positioning indication using a Kalman filter.

Example 16: The method of any of examples 11-15, further comprising: estimating, for each point in time of the series of consecutive points in time, a yaw rate of the trailer based on the indication of the yaw rate of the tractor and the indication of the articulation angle; and estimating, for each point in time of the series of consecutive points in time, the instantaneous turning radius of the trailer based on the longitudinal speed of the tractor and the yaw rate of the trailer.

Example 17: The method of any of examples 11-16, further comprising: estimating, for each point in time of the series of consecutive points in time, a side slip rate of the trailer using a kinematic vehicle model; and estimating, for each point in time of the series of consecutive points in time, the instantaneous turning radius of the trailer based on the longitudinal speed of the trailer and the yaw rate of the trailer.

Example 18: The method of any of examples 11-17, further comprising controlling the tractor using control parameters adapted for the instantaneous path curvature.

Example 19: A computer program product comprising program code for performing, when executed by the processing circuitry comprised in the computer system of any one of examples 1-8, the method of any of examples 11-18.

Example 20: A non-transitory computer-readable storage medium comprising instructions, which when executed by the processing circuitry comprised in the computer system of any one of examples 1-8, cause the processing circuitry to perform the method of any of example 11-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (23) comprising processing circuitry (25) configured to:
receive, for each point in time of a series of consecutive points in time, a set of indications including an indication of an articulation angle (θ) of an articulated joint (7) coupling a tractor (3) and a trailer (5) together to thereby form a combination vehicle (1), an indication of a yaw rate (ω_{z,tractor}) of the tractor (3), and an indication of a longitudinal speed (vₓ) of the tractor (3);
estimate, for each point in time of the series of consecutive points in time, an instantaneous turning radius (Rᵢᵣ) of the trailer (5) based on the indication of the articulation angle (θ), the indication of the yaw rate (ω_{z,tractor}) of the tractor (3), and the indication of the longitudinal speed (vₓ) of the tractor (3);
curve-fit a time series of estimated instantaneous turning radii (Rᵢᵣ) of the trailer (5) to an arc (33) of a circle having a radius (R); and
determine an indication of an instantaneous path curvature of the trailer (5) based on the radius (R) of the circle.

2. The computer system (23) of claim 1, wherein the processing circuitry (25) is further configured to:
curve-fit the time series of estimated instantaneous turning radii (Rᵢᵣ) of the trailer (5) using a least square curve-fitting method.

3. The computer system (23) of claim 1 or 2, wherein:
the indication of the articulation angle (θ) of the articulated joint (7) comprises a steering angle (δ) of the tractor (3); and
the processing circuitry (25) is further configured to estimate the articulation angle (θ) of the articulated joint (7) based on the steering angle (δ) of the tractor (3) using a kinematic vehicle model, resulting in a modeled estimate of the articulation angle (θ).

4. The computer system (23) of claim 3, wherein:
the indication of the articulation angle (θ) of the articulated joint (7) comprises a trailer positioning indication obtained from a trailer sensing system (31) comprised in the tractor (3); and
the processing circuitry (25) is further configured to estimate the articulation angle (θ) of the articulated joint (7) additionally based on the trailer positioning indication.

5. The computer system (23) of claim 4, wherein the processing circuitry (25) is further configured to estimate the articulation angle (θ) of the articulated joint (7) additionally based on the trailer positioning indication using a Kalman filter.

6. The computer system (23) of any of claims 1-5, wherein the processing circuitry (25) is further configured to:
estimate, for each point in time of the series of consecutive points in time, a yaw rate (ω_{z,trailer}) of the trailer (5) based on the indication of the yaw rate (ω_{tractor}) of the tractor (3) and the indication of the articulation angle (θ); and
estimate, for each point in time of the series of consecutive points in time, the instantaneous turning radius (Rᵢᵣ) of the trailer (5) based on the longitudinal speed (vₓ) of the tractor (3) and the yaw rate (ω_{z,trailer}) of the trailer (5).

7. The computer system (23) of any of claims 1-6, wherein the processing circuitry (25) is further configured to:
estimate, for each point in time of the series of consecutive points in time, a side slip rate (*β̇*) of the trailer (5) using a kinematic vehicle model; and
estimate, for each point in time of the series of consecutive points in time, the instantaneous turning radius (Rᵢᵣ) of the trailer (5) based on the longitudinal speed (vₓ) of the trailer (3) and the yaw rate (ω_{z,trailer}) of the trailer (5).

8. The computer system (23) of any of claims 1-7, wherein the processing circuitry (25) is further configured to control the tractor (3) using control parameters adapted for the instantaneous path curvature.

9. A vehicle (3) comprising:
a coupling arrangement (7) for articulated coupling of a trailer (5) to the vehicle (3); and
the computer system (23) of any of claims 1-8.

10. The vehicle (3) of claim 9, further comprising an trailer sensing system (31) arranged and configured to provide trailer positioning indication of a trailer (5) coupled to the vehicle (3).

11. A computer-implemented method, comprising:
receiving (S51), for each point in time of a series of consecutive points in time, a set of indications including an indication of an articulation angle (θ) of an articulated joint (7) coupling a tractor (3) and a trailer (5) together to thereby form a combination vehicle (1), an indication of a yaw rate (ω_{z,tractor}) of the tractor (3), and an indication of a longitudinal speed (vₓ) of the tractor (3);
estimating (S52), for each point in time of the series of consecutive points in time, an instantaneous turning radius (Rᵢᵣ) of the trailer (5) based on the indication of the articulation angle (θ), the indication of the yaw rate (ω_{z,tractor}) of the tractor (3), and the indication of the longitudinal speed (vₓ) of the tractor (3);
curve-fitting (S53) a time series of estimated instantaneous turning radii (Rᵢᵣ) of the trailer (5) to an arc (33) of a circle having a radius (R); and
determining (S54) an indication of an instantaneous path curvature of the trailer (5) based on the radius (R) of the circle.

12. The method of claim 11, further comprising:
curve-fitting the time series of estimated instantaneous turning radii (Rᵢᵣ) of the trailer (5) using a least square curve-fitting method.

13. The method of claim 11 or 12, wherein:
the indication of the articulation angle (θ) of the articulated joint (7) comprises a steering angle (δ) of the tractor (3); and
the method further comprises estimating the articulation angle (θ) of the articulated joint (7) based on the steering angle (δ) of the tractor (3) using a kinematic vehicle model, resulting in a modeled estimate of the articulation angle (θ).

14. The method of claim 13, wherein:
the indication of the articulation angle (θ) of the articulated joint (7) comprises a trailer positioning indication obtained from a trailer sensing system (31) comprised in the tractor (3); and
the method comprises estimating the articulation angle (0) of the articulated joint (7) additionally based on the trailer positioning indication.

15. A computer program product comprising program code for performing, when executed by the processing circuitry (25) comprised in the computer system (23) of any one of claims 1-8, the method of any of claims 11-14.
